# EUROPÄISCHE PATENTANMELDUNG

(11) **EP 2 067 813 A1**
(43) Veröffentlichungstag der Anmeldung: **10.06.2009**
(21) Anmeldenummer: 07122124.6
(22) Anmeldetag: 03.12.2007
(51) Int. Cl.: C08J 5/18, B32B 17/10

(54) **Glykol- und Glycerinester als Antiblockmittel für Zwischenschichtfolien für Verbundglas**

(71) Anmelder: Kuraray Europe GmbH, 65926 Frankfurt am Main (DE)
(72) Erfinder: Keller, Uwe, Dr., 53177, Bonn (DE)
(74) Vertreter: Kisters, Michael Marcus

(57) **Zusammenfassung**

Die Erfindung betrifft eine Folie auf Basis von teilacetalisiertem Polyvinylalkohol, enthaltend:
- 85 bis 60 Gew.% teilacetalisierter Polyvinylalkohol
- 15 bis 40 Gew.% mindestens eines Weichmachers
- 0,001 bis 5 Gew.% mindestens einer Verbindung der allgemeinen Formeln I und/oder II

R¹-O-(CH₂CH₂O)-R² (I)

R³-O- (CH₂CH(OR²) CH₂-O)ₙ-CH₂-CH (OR²) CH₂OH (II)

mit R¹ = Carbonsäure mit 12 bis 25 Kohlenstoffatomen
R² = H, Carbonsäure mit 12 bis 25 Kohlenstoffatomen
R³ = H, Carbonsäure mit 12 bis 25 Kohlenstoffatomen
n = 1 bis 10
m = 0 bis 10
unter der Maßgabe, das R² und R³ nicht gleichzeitig H bedeuten.

Erfindungsgemäße Folien können zur Herstellung von Verbundverglasungen im Automobil- und Architekturbereich und zur Herstellung von Photovoltaikmodulen verwendet werden.

## Beschreibung

### Technisches Gebiet

Die Erfindung betrifft die Verringerung der Blocking-Eigenschaften (Eigenklebrigkeit) von Folien auf Basis von teilacetalisiertem Polyvinylalkohol.

Verbundsicherheitsscheiben, bestehend aus zwei Glasscheiben und einer die Glasscheiben verbindenden Klebefolie aus weichmacherhaltigen teilacetalisierten Polyvinylalkoholen, vorzugsweise aus Polyvinylbutyral (PVB), werden insbesondere als Windschutzscheiben in Kraftfahrzeugen eingesetzt, wobei gegebenenfalls eine Glasscheibe durch eine Kunststoffscheibe, vornehmlich aus einem amorphen Polyamid, transparentem PMMA, Polycarbonat oder Polyester, ersetzt sein kann.

Auch auf dem Bausektor, z. B. als Fensterscheiben oder als Zwischenwände, werden solche Silikatglas/Silikatglas- bzw. Silikatglas/Kunststoff-Verbunde eingesetzt, wobei gegebenenfalls je nach ihrer Verwendung, z. B. als Verbundpanzergläser, auch Mehrfachverbunde, also Verbunde, die aus mehr als zwei tragenden Schichten bestehen, eingesetzt werden.

Sowohl im Fahrzeug- als auch im Baubereich werden neben den üblichen Folien, deren Hauptwirkung in Splitterbindung und mechanischer Stabilisierung der Glasstruktur liegt, auch Folien mit höherer Weichheit eingesetzt, welche zusätzlich zu den genannten Funktionen eine verbesserte Schalldämmung des entsprechenden Glasbauteiles bewirken.

Während Verbundsicherheitsscheiben für den Baubereich i.a. eine möglichst hohe Haftung zwischen Glas und Klebefolie aufweisen sollen, wird für Verbundsicherheitsscheiben für Kraftfahrzeuge eine definierte, nicht zu hohe Haftung angestrebt. Verbundsicherheitsgläser bestehen im Allgemeinen aus zwei Glasscheiben und einer die Glasscheiben verbindenden Klebefolie.

Die Klebefolien zur Herstellung von Verbundsicherheitsscheiben werden in der Regel extrudiert und nach der Formgebung in Breitschlitzwerkzeugen zu großen Rollen aufgewickelt. Die Klebefolien - nachfolgend auch verkürzt PVB-Folien genannt - weisen jedoch nicht nur eine gute Haftung gegenüber Glas, sondern auch gegenüber der benachbarten Wickellage der Rollen auf. Diese "Blocking-Neigung" genannte Eigenschaft erschwert die Handhabung der Folien insbesondere beim Auf- bzw. Abwickeln. Neben der Rollenware wird weichmacherhaltiges PVB auch als gestapelte Zuschnitt-Ware (sog. blanks) vertrieben, wobei die Blocking-Neigung ebenfalls unerwünscht ist.

Bei der Herstellung von Verbundverglasungen wird üblicherweise zunächst unter geringem mechanischem Druck ein sog. Vorverbund erzeugt. Vorverbünde stellen bereits verklebte Laminate dar, die aber noch Luftblasen, d.h. eine gewisse Trübung aufweisen. Diese Trübung wird in der Regel in einem nachgelagerten Autoklavenprozess beseitigt.

Nicht nur die Haftung zum Glas im fertigen Endprodukt, dem sogenannten Endverbund, auch das Ankleben der Folie am Glas während des dem Autoklavenschritt vorgeschalteten Prozesses, der sogenannten Vorverbundherstellung, ist eine für die Verwendbarkeit einer PVB-Folie notwendige Eigenschaft. Bei dem üblichen Verfahren zur Vorverbundherstellung, dem Walzenvorverbundverfahren, wird das zunächst lose zusammengelegte Sandwich aus Glas / PVB-Folie / Glas in einer IR-Strahlerstrecke erwärmt und gleichzeitig durch gummibeschichtete Walzenpaare zusammengepresst. Klebt die noch warme Folie nach dem Zusammenpressen im Walzenspalt nicht ausreichend bzw. löst sie sich beim Abkühlen wieder ab, kann dies z.B. auf dem Transportweg zum Autoklaven bzw. beim vertikalen Abstapeln der Vorverbunde auf dem Autoklavengestell dazu führen, dass sich eine Glasscheibe löst und damit den Vorverbund unbrauchbar macht.

### Stand der Technik

Aus der DE 17 04 568 A1 ist ein Verfahren zur Herstellung von weichmacherhaltigen, oberflächenmattierten Polyvinylbutyralfolien bekannt, bei dem man die bereits mit dem gewünschten Wassergehalt versehenen PVB-Folien zusammen mit einer als Trennschicht wirkenden Einlage aus einer gegebenenfalls mattierten Polyolefinfolie aufspult und die so erhaltenen Rollen luft- und feuchtigkeitsdicht verpackt. Der Einsatz dieser sogenannten Zwischenläuferfolie ist allerdings umständlich. Die Zwischenläuferfolie muss anschließend entsorgt werden.

Aus der DE 19 27 936 A1 ist ein Verfahren zur Herstellung von weichmacherhaltigen Polyvinylbutyralfolien geringerer Klebneigung bekannt, die nach dem Waschen Folien mit beidseitig aufgerauten Oberflächen ergeben. Hierzu pudert man die Folien in noch warmem Zustand nach der Extrusion oder gegebenenfalls nach oberflächlicher Erwärmung mit gegenüber den Folien indifferenten, wasserlöslichen, nicht hygroskopischen, vorzugsweise kristallinen und farblosen Stoffen ein, die man durch Aufpressen in der Wärme auf den Folien verankert. Dieses Verfahren ist jedoch sehr aufwendig. Zudem lassen sich die Pudermaterialien nicht immer vollständig entfernen.

Weiterhin gibt es zahlreiche Publikationen, die eine vorübergehende Verringerung der Klebrigkeit der weichmacherhaltigen Polyvinylbutyralfolien mittels spezieller Oberflächenprägungen oder anderweitiges Erzeugen besonderer Oberflächenstrukturen anstreben (z. B. EP 0 710 545 A1, EP 0 185 863 B1). In der Regel reicht der hierdurch erzielte Effekt jedoch nicht aus, um die Folienwickel bei üblichen Umgebungstemperaturen, d.h. über 15 °C, transportieren zu können.

Rollen aus PVB-Folien werden daher trotz optimierter Oberflächengestaltung nahezu ausschließlich entweder mit Zwischenläuferfolien ausgeliefert oder als sogenannte Kühlfolie eingesetzt. Hierbei wird die Folie noch vor dem Aufwickeln auf eine Temperatur von 4 - 10 °C gekühlt. Die fertigen Folienwickel müssen ohne Unterbrechung der Kühlkette bis zur Weiterverarbeitung bei einer Temperatur von unter 10 C transportiert werden.

Es sind auch Ansätze bekannt geworden, die Blocking-Neigung von PVB-Folien durch Modifikation des PVB-Harzes, der Weichmacher oder durch Zusatz von die Klebrigkeit vermindernden Substanzen zu verringern (US 4,999,078 A1, EP 0 067 022 B2). Diese Verfahren haben jedoch in der Regel zum Nachteil, dass die Haftung der Folie gegenüber dem Glas bei der späteren Laminierung ebenfalls beeinflusst wird oder ihre Wirkung nicht ausreichend hoch ist, um die Kühlung vermeiden zu können. Ein weiterer Nachteil dieser Verfahren ist, dass modifizierte PVB-Harze und Weichmacher kommerziell nur sehr eingeschränkt verfügbar sind. Diese Alternativen konnten sich daher auf dem Markt bislang nicht durchsetzen.

Darüber hinaus ist die Verwendung von sogenannten Antiblockmitteln in PVB-Folie, also von speziellen Additiven, die in der Regel einen wachsartigen Charakter haben, bekannt.

DE 100 64 373 beschreibt die Verwendung von Fettsäurediamiden, insbesondere von Stearinsäurediamid zur Reduzierung der Eigenklebrigkeit von PVB-Folie. Jedoch hat Stearinsäurediamid einen hohen Schmelzpunkt, was in Verbindung mit der starken Kristallisationsneigung der Amidstruktur gegebenenfalls zu einer Eintrübung der Folie durch Rekristallisation des Additivs führen kann. Ein weiterer Nachteil von Fettsäurediamiden ist die Herabsetzung der Vorverbundhaftung insbesondere bei Folien mit erhöhter Weichheit.

EP 1 430 094 B1 beschreibt die Verwendung von Pentaerythritestern zur Reduzierung der Eigenklebrigkeit von PVB-Folie. Diese Ester reduzieren besonders wirksam die Eigenklebrigkeit haben aber insbesondere in Folien mit erhöhter Weichheit den nachteiligen Effekt, die Vorverbundhaftung stark herabzusetzen.

WO 2004111116 A1 beschreibt die Verwendung von ionischen Tensiden und WO 2004111115 A1 die Verwendung von amphiphilen Polyethylen-Polyethylenglykolen als Antiblockmittel. Diese Verbindungen werden auf die Oberfläche der Folie aufgebracht, was einen zusätzlichen Prozessschritt und damit erhöhten Aufwand bedeutet.

WO 2004108804 A1 beschreibt die Fluorierung der Folienoberfläche zur Reduktion von deren Eigenklebrigkeit, jedoch ist damit die Handhabung von Fluor aufwändig und mit zusätzlichen Kosten für notwendige Sicherheitsvorrichtungen verbunden.

US 20040219365 beschreibt die Verwendung von mono-Amiden mit Fettsäureresten als Antiblockmittel, jedoch können diese aufgrund der starken Kristallisationsneigung der Amidstruktur auf der Folienoberfläche zeitverzögert einen wachsartigen Belag bilden, so dass die Haltbarkeit damit hergestellter PVB-Folie begrenzt ist.

### Aufgabe

Aufgabe der vorliegenden Erfindung ist es, geeignete Additive für weichmacherhaltige Folie auf der Basis von teilacetalisierten Polyvinylalkoholen zur Verfügung zu stellen, die eine verringerte Eigenklebrigkeit bzw. Blockingverhalten der Folie bewirken, ohne Beeinträchtigung des Haftungsverhaltens der Folie am Glas, insbesondere im Vorverbund.

### Darstellung der Erfindung

Kern der vorliegenden Erfindung ist die Verwendung bestimmter Fettsäureester von Mono- und Oligoglykolen zur Verhinderung des Klebens der Folie auf sich selbst.

Überraschenderweise hat sich herausgestellt, dass bestimmte Fettsäureester von Mono- und Oligoglykolen sich bereits in geringen Konzentrationen dazu eignen, in weichgemachten Polyvinylacetalfolien die Eigenklebrigkeit erheblich zu vermindern, ohne dass es zu einer Beeinträchtigung der Vorverbundhaftung kommt. Auch alle anderen Folieneigenschaften wie beispielsweise Enverbundhaftung, Folienfarbe oder die hohe Transparenz bleiben völlig unverändert.

Gegenstand der vorliegenden Erfindung ist daher eine Folie auf Basis von teilacetalisiertem Polyvinylalkohol, enthaltend:
- 85 bis 60 Gew.% teilacetalisierter Polyvinylalkohol
- 15 bis 40 Gew.% mindestens eines Weichmachers
- 0,001 bis 5 Gew.%, bevorzugt 0,001 bis 1 Gew.%, insbesondere 0,001 bis 0,5 Gew.% mindestens einer
   Verbindung der allgemeinen Formeln I und/oder II

   R¹-O-(CH₂CH₂O)ₙ-R² (I)

   R³-O-(CH₂CH(OR²)CH₂-O)ₘ-CH₂-CH(OR²)CH₂OH (II)

   mit R¹ = Carbonsäure mit 12 bis 25 Kohlenstoffatomen R² = H, Carbonsäure mit 12 bis 25 Kohlenstoffatomen
   R³ = H, Carbonsäure mit 12 bis 25 Kohlenstoffatomen n = 1 bis 10
   m = 0 bis 10 unter der Maßgabe, das R² und R³ nicht gleichzeitig H bedeuten.

Im Folgenden werden Verbindungen der allgemeinen Formeln I oder II als Antiblockingmittel bezeichnet.

Als erfindungsgemäß verwendete Antiblockmittel eignen sich Fettsäureester von Mono-, Di- und Oligoethylenglykolen (Formel I) sowie Fettsäureester von Mono-, Di- und Oligoglycerinen (Formel II). Der Fettsäureanteil kann darin jeweils eine Monocarbonsäure mit einer Kettenlänge von mindestens 12 Kohlenstoffatomen, entweder gesättigt oder ein- oder mehrfach ungesättigt sein.

Weiteres gemeinsames Merkmal der erfindungsgemäß verwendeten Antiblockmittel ist deren Schmelzpunkt, welcher kleiner als 70 °C, bevorzugt kleiner als 65 °C und besonders bevorzugt kleiner als 62 °C sein kann. Damit wird sichergestellt, dass nach Verarbeitung der Folie im Endprodukt keine zeitverzögerte Kristallisation einsetzt, was zu einer Trübung desselben führen würde.

Vorteil der erfindungsgemäßen Antiblockmittel ist deren breite Verfügbarkeit am Markt, da diese als Ester einfach darstellbar sind und für andere Anwendungen vielfältig eingesetzt werden.

In der Praxis werden entsprechende Produkte aus produktionstechnischen Gründen nicht als Reinsubstanz im chemischen Sinne angeboten, sondern liegen oft als Mischung mehrerer Bestandteile vor. Beispielsweise ist Glykoldistearat als Glycolube® 674 von Lonza erhältlich, enthält aber laut Sicherheitsdatenblatt des Herstellers auch einen Anteil Glykolmonostearat. Ähnlich verhält es sich mit den Fettsäureestern des Glycerins, welches in der Regel neben dem Monoester als weitere Komponenten die Di- und Triester enthalten. Ähnliches gilt für den Fettsäuranteil, welcher in kommerziellen Produkten herstellbedingt Mischungen mit niederen oder höheren Homologen mit einschließt. Mischungen dieser Art können erfindungsgemäß eingesetzt werden, sofern die unerwünschten Mischungsbestandteile keinen nachteiligen Effekt besitzen.

Neben den Verbindungen der Formeln I oder II enthalten die erfindungsgemäßen Folien mindestens einen Weichmacher. Bevorzugt weisen die Folien einen Weichmachergehalt von maximal 40 Gew.%, besonders bevorzugt von maximal 38 Gew.% und insbesondere von maximal 36 Gew.% auf, wobei ein Weichmachergehalt von 15 Gew.% aus Gründen der Verarbeitbarkeit der Folie nicht unterschritten werden sollte. Erfindungsgemäße Folien können einen oder mehrere Weichmacher enthalten. In der Regel enthalten die erfindungsgemäßen Folien mindestens 24 Gew.% Weichmacher.

Besonders geeignet sind Weichmacher ausgewählt aus der Gruppe i-2-ethylhexylsebacat (DOS), Di-2-ethylhexyladipat (DOA), Di-2-ethylhexylphthalat (DOP), Dihexyladipat (DHA), Dibutylsebacat (DBS), Di-2-butoxyethylsebacat (DBES), Triethylenglykol-bis-2-ethylhexanoat (3G8), Triethylenglykolbis-n-heptanoat (3G7), Tetraethylenglykol-bis-n-heptanoat (4G7), Di-2-butoxyethyladipat (DBEA), Di-2-butoxyethoxyethyladipat (DBEEA).

Als teilacetalisierter Polyvinylalkohol kann ein mit einem oder mehreren Aldehyden mit 1 bis 6 Kohlenstoffatomen acetalisierter Polyvinylalkohol mit einem Hydrolysegrad von mindestens 97 % eingesetzt werden.

Die auf weichmacherhaltigem Polyvinylacetal basierenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mindestens 97 Mol.% hydrolysiert und enthalten 1 bis 10 Gew. auf Ethylen basierende Einheiten (z.B. Typ "Exceval" der Kuraray Europe GmbH).

Die Acetalisierung dieser Copolymere kann mit einem oder mehreren Aldehyden mit 1 bis 6 Kohlenstoffatomen, bevorzugt Butyraldehyd erfolgen.

Die genannten Polyvinylacetale enthalten neben den Acetaleinheiten noch aus Vinylacetat und Vinylalkohol resultierende Einheiten. Die erfindungsgemäß verwendeten Polyvinylacetale weisen bevorzugt einen Vinylalkoholanteil von 25-12, insbesondere 25-18 Gew.% auf. Ein Vinylalkoholanteil von 12 Gew.% sollte nicht unterschritten werden.

Der Vinylacetatanteil liegt bevorzugt unter 5 Gew.%, bevorzugt unter 3 Gew.% und insbesondere unter 2 Gew.% Aus dem Vinylalkoholanteil und dem Restacetatgehalt kann der Acetalisierungsgrad rechnerisch ermittelt werden.

Soweit in dieser Anmeldung der Begriff Polyvinylbutyral (PVB) verwendet wird, sollen damit gleichzeitig auch diejenigen Polymere eingeschlossen werden, die ähnliche Eigenschaften in Bezug auf ihre Verwendbarkeit haben wie (weichmacherhaltiges) Polyvinylbutyral. Hierzu gehören beispielsweise Ethylenvinylacetat oder bestimmte andere Ethylen-Copolymere. Als relevante Eigenschaften werden hier insbesondere die Klebrigkeit der Oberfläche, die Weichheit und die Gummielastizität bei Raumtemperatur angesehen.

Das Haftungsvermögen von Polyvinylacetalfolien an Glas wird üblicherweise durch die Zugabe von Haftungsregulatoren wie z. B. die in WO 03/033583 A1 offenbarten Alkali- und/oder Erdalkalisalze von organischen Säuren eingestellt. Als besonders geeignet haben sich Kaliumacetat und/oder Magnesiumacetat herausgestellt. Zudem enthalten Polyvinylacetale aus dem Herstellungsprozess häufig Alkali- und/oder Erdalkalisalze von anorganischen Säuren, wie z.B. Natriumchlorid.

Die erfindungsgemäßen Folie enthalten bevorzugt weniger als 200 ppm, besonders bevorzugt weniger als 100 ppm und insbesondere weniger als 50 ppm bzw. weniger als 30 ppm der genannten Metallionen, z.B. in Form von Natrium-, Kalium-, Lithium-, Magnesium-, Calzium- und/oder Zinksalze organischer Säuren (z.B. Acetate).

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.
Die Dicke der auf weichmacherhaltigem Polyvinylacetal basierenden Folien liegt üblicherweise bei 0.38, 0.51, 0.76, 1.14, 1.52 oder 2.28 mm.

Zur Laminierung eines Schichtkörpers z.B. aus zwei Glasscheiben und einer zwischengelegten erfindungsgemäßen Folie können die dem Fachmann geläufigen Verfahren mit und ohne vorhergehende Herstellung eines Vorverbundes eingesetzt werden.

So genannte Autoklavenprozesse werden bei einem erhöhten Druck von ca. 10 bis 15 bar und Temperaturen von 130 bis 145 °C über ca. 2 Stunden durchgeführt. Vakuumsack- oder Vakuumringverfahren z.B. gemäß EP 1 235 683 B1 arbeiten bei ca. 200 mbar und 130 bis 145 °C

Weiterhin können zur Laminierung Vakuumlaminatoren eingesetzt werden. Diese bestehen aus einer beheizbaren und evakuierbaren Kammer, in denen Verbundverglasungen innerhalb von 30 - 60 Minuten laminiert werden können. Verminderte Drücke von 0,01 bis 300 mbar und Temperaturen von 100 bis 200 °C, insbesondere 130 - 160 °C haben sich in der Praxis bewährt.

Alternativ können die zusammengelegten Schichtkörper zwischen mindestens einem Walzenpaar bei einer Temperatur von 60 bis 150 °C zu einem erfindungsgemäßen Modul verpresst werden. Anlagen dieser Art sind zur Herstellung von Verbundverglasungen bekannt und verfügen normalerweise über mindestens einen Heiztunnel vor bzw. nach dem ersten Presswerk bei Anlagen mit zwei Presswerken.

Erfindungsgemäße Folien können zur Herstellung von Verbundverglasungen im Automobil- und Architekturbereich und zur Herstellung von Photovoltaikmodulen, als Fassadenbauteil, Dachflächen, Wintergartenabdeckung, Schallschutzwand, Balkon- oder Brüstungselement oder als Bestandteil von Fensterflächen verwendet werden.

### Messung Blockingkraft

Zur Quantifizierung der Eigenhaftung (Blockingkraft) ist aus der EP 0 067 022 B2 ein sogenannter T-peel-strength-Test bekannt: Hierbei werden zwei 3 cm x 10 cm große Streifen der zu testenden Folie unter einer Last von 60 N bei einer Temperatur von 23 °C für 48 h aufeinandergelegt. Anschließend werden die Streifen mit definierter Geschwindigkeit von 500 mm/min unter einen Winkel von 2 x 90 ° unter Messung der Abzugskraft auseinandergezogen. Im Übrigen wird hiermit auf die Beschreibung des T-peel-strength-Tests in der EP 0 067 022 B2 verwiesen.

Dieser T-peel-strength-Test eignet sich gut dazu, die für die Wirksamkeit der erfindungsgemäß eingesetzten Antiblockingmittel vom Estertyp benötigten Mindestmengen zu ermitteln. Bevorzugt werden die Antiblockingmittel vom Estertyp in solcher Konzentration eingesetzt, die eine Verringerung der Abzugskraft um mindestens 15 %, bevorzugt um mindestens 35 % und besonders bevorzugt um mindestens 50 % bewirkt.

### Messung Vorverbundhaftung

Zur Beurteilung der Vorverbundhaftung einer PVB-Folie am Mineralglas wird ein sogenannter Kompressionsschertest gemäß der DE 197 56 274 A1 durchgeführt. Zur Herstellung der Prüfkörper wird die zu prüfende PVB-Folie nach Einstellung der Standardsollfeuchte von 0.45% zwischen zwei ebene Floatglasscheiben des Formats 300 mm x 300 mm mit einer Dicke von 2 mm gebracht und in einer zweistufigem Vorverbundstrecken, welche aus einer ersten Heizzone und einem ersten Walzenpaar und einem zweiten Heizzone und einem zweiten Walzenpaar besteht zum Vorverbund verklebt. Die Heizleistung und Durchlaufgeschwindigkeit sind so einzustellen, dass das Sandwich in der ersten Stufe (d.h. bei Austritt aus dem ersten Walzenpaar) eine an der Glasoberfläche gemessene Temperatur von 35 °C und in der zweiten Stufe eine an der Glasoberfläche gemessene Temperatur von 60 °C erreicht. Aus dem so hergestellten Vorverbund werden vorsichtig 10 Proben mit den Maßen 25,4 mm x 25,4 mm so geschnitten, dass keine Delamination der auf dieser Stufe ja nur relativ schwach am Glas haftenden Folie erfolgt. Die Prüfkörper sind nach frühestens nach Erreichen der Prüftemperatur von 23 °C und spätestens 2 Stunden nach Vorverbundherstellung zu messen. Die Prüfkörper werden unter einem Winkel von 45° in eine zweiteilige, in Fig. 1 der DE 197 56 274 A1 symbolisch dargestellte Prüfapparatur eingespannt. Die obere Hälfte wird mit einer stetig steigenden, genau vertikal nach unten gerichteten Kraft beaufschlagt, bis es zu einer Abscherung innerhalb des Prüfkörpers, d. h. des zu prüfenden Vorverbundes, kommt. Die Prüfparameter sind wie folgt:

**Tabelle 1:**

| | |
|---|---|
| Prüfkörper: | quadratisch 25,4 mm x 25,4 mm |
| Verlegung: | untere Scheibe jeweils mit der Luft bzw. Feuerseite zur Folie (Luft/Luft), oder obere und untere Scheibe jeweils mit der Zinnseite zur Folie (Bad/Bad) |
| Lagerung vor dem Versuch: | Mindestens 1h bei Normklima 23°C/50% RLF |
| Vorschub: | 2,5 mm/min |
| Probenanzahl: | 10 |
| Auswertung: | Maximalkraft, die zur Abscherung der Folie vom Glas benötigt wird. Die Kraft wird auf die Probenfläche bezogen (in N/mm²) |

Für jedes Beispiel wird die bei der Abscherung ausgeübte Kraft von zehn gleichen Prüfkörpern linear gemittelt. Soweit in den nachfolgenden Beispielen und den Ansprüchen auf den mittleren Kompressionsschertest-Wert Bezug genommen wird, ist damit dieser Mittelwert aus 10 Messungen gemeint. Im Übrigen wird auf die DE 197 56 274 A1 verwiesen.

Die Vorverbundhaftung in Konfiguration F/F bzw. Sn/Sn beträgt bei Verwendung der erfindungsgemäßen Antiblockmittel vom Estertyp mindestens 50%, bevorzugt 65% und besonders bevorzugt 80% der Werte, welche eine entsprechende zusammengesetzte Folie ohne Antiblockmittel vom Ester-Typ erreicht.

### Beispiele

Es wurden Mischungen der in der folgenden Tabelle aufgeführten Zusammensetzungen hergestellt und zu Folien der Dicke 0,76 mm verpresst. Anschließend wurden Vorverbünde mit zwei Scheiben PLANILUX (2 mm) wie oben beschrieben hergestellt und auf ihre Kompressionsscherhaftung untersucht.

Es zeigt sich, dass erfindungsgemäße Folien eine gute Vorverbundhaftung bei gleichzeitig niedriger Blockingkraft aufweisen.

| Beispiel: | 1 | 2 | 3 | 4 | C1 | C2 | C3 | C4 |
|---|---|---|---|---|---|---|---|---|
| PVB | 65 | 65 | 65 | 65 | 65 | 65 | 65 | 65 |
| 3G8 | 35 | 35 | 35 | 35 | 35 | 35 | 35 | 35 |
| Crodamide 203 | | | | | | | | 0,15 |
| Glycolube P | | | | | | 0,075 | | |
| Glycolube 674 | 0,15 | | | | | | | |
| Glycolube 742 | | 0,15 | | | | | | |
| Glycolube 140 | | | 0,15 | | | | | |
| Licolub FA 1 | | | | | | | 0,075 | |
| Triethylengly kol distearat | | | | 0,15 | | | | |
| Schmelzpunkt ABM (° C) | 59 | 56 | 60 | - | - | 62 | 142 | 63 |
| Weißer Belag auf Folien oberfläche * | nein | nein | nein | nein | nein | Nein | Ja | ja |
| Trübung in VSG * | nein | nein | nein | nein | nein | Nein | ja | nein |
| Blockingtest glatt/glatt | 3,8 | 4,3 | 3,6 | 4,7 | 9,2 | 2,7 | 7,1 | 3,6 |
| Vorverbundhaf tung FF 60 °C | 1,8 | 1,8 | 1,6 | 1,8 | 1,8 | 0,3 | 0,2 | 1,8 |
| Vorverbundhaf tung SS 60 °C | 4,7 | 4,4 | 4,3 | 4,8 | 5,3 | 1,9 | 0,3 | 4,9 |

- nach 8 Wochen Lagerung bei Raumtemperatur Es bedeuten:
   Crodamide 203: Oleyl palmitamid
   Glycolube P: Pentaerythrityl-tetrastearat
   Glycolube 674: Monoethylenglykol-distearat
   Glycolube 742: Diglyceryl-monostearat
   Glycolube 140: Glycerin-monostearat
   Licolub FA1: Ethylendiamin-distearylamid

## Patentansprüche

1. Folie auf Basis von teilacetalisiertem Polyvinylalkohol, enthaltend:
- 85 bis 60 Gew.% teilacetalisierter Polyvinylalkohol
- 15 bis 40 Gew.% mindestens eines Weichmachers
- 0,001 bis 5 Gew.% mindestens einer Verbindung der
allgemeinen Formeln I und/oder II
R¹-O-(CH₂CH₂O)ₙ-R² (I)
R³-O-(CH₂CH(OR²)CH₂-O)ₘ-CH₂-CH(OR²)CH₂OH (II)
mit R¹ = Carbonsäure mit 12 bis 25 Kohlenstoffatomen
R² = H, Carbonsäure mit 12 bis 25 Kohlenstoffatomen
R³ = H, Carbonsäure mit 12 bis 25 Kohlenstoffatomen
n = 1 bis 10
m = 0 bis 10 unter der Maßgabe, das R² und R³ nicht gleichzeitig
H bedeuten.

2. Folie nach Anspruch 1, **dadurch gekennzeichnet, dass** als Weichmacher mindestens eine Verbindung ausgewählt aus der Gruppe i-2-ethylhexylsebacat (DOS), Di-2-ethylhexyladipat (DOA), Di-2-ethylhexylphthalat (DOP), Dihexyladipat (DHA), Dibutylsebacat (DBS), Di-2-butoxyethylsebacat (DBES), Triethylenglykol-bis-2-ethylhexanoat (3G8), Triethylenglykol-bis-n-heptanoat (3G7), Tetraethylenglykol-bis-n-heptanoat (4G7), Di-2-butoxyethyladipat (DBEA), Di-2-butoxyethoxyethyladipat (DBEEA) eingesetzt wird.

3. Folie nach einem der Ansprüche 1 oder 2, **dadurch gekennzeichnet, dass** die Verbindungen der Formeln I und II einen Schmelzpunkt von weniger als 70°C aufweisen.

4. Folie nach einem der Ansprüche 1 bis 3, **dadurch gekennzeichnet, dass** als teilacetalisierter Polyvinylalkohol ein mit einem oder mehreren Aldehyden mit 1 bis 6 Kohlenstoffatomen acetalisierter Polyvinylalkohol mit einem Hydrolysegrad von mindestens 97 % eingesetzt wird.

5. Folie nach einem der Ansprüche 1 bis 3, **dadurch gekennzeichnet, dass** als acetalisierter Polyvinylalkohol ein mit einem oder mehreren Aldehyden mit 1 bis 6 Kohlenstoffatomen Vinylacetat/Vinylalkohol/EthylenCopolymer mit einem Hydrolysegrad von mindestens 97 % eingesetzt wird.

6. Verwendung der Folie nach einem der Ansprüche 1 bis 5 zur Herstellung von Verbundverglasungen im Automobil- und Architekturbereich und zur Herstellung von Photovoltaikmodulen.
